# EUROPEAN PATENT APPLICATION

(11) **EP 3 816 347 A1**
(43) Date of publication of application: **05.05.2021**
(21) Application number: 19825358.5
(22) Date of filing: 17.06.2019
(51) Int. Cl.: D21H 27/00, A47G 19/22, A47G 21/18

(54) **PAPER TUBE BASE PAPER AND PAPER TUBE**

(30) Priority: 27.06.2018 JP 2018122443
(71) Applicant: Nippon Paper Industries Co., Ltd., Tokyo 114-0002 (JP)
(72) Inventor: KAWASAKI Kentaro, Tokyo 114-0002 (JP); HOSHINO Akio, Tokyo 114-0002 (JP); TSUNODA Hirosuke, Tokyo 114-0002 (JP); MURATA Yuka, Tokyo 114-0002 (JP); YOSHIDA Yoshio, Tokyo 114-0002 (JP)
(74) Representative: Grünecker Patent- und Rechtsanwälte PartG mbB
(86) International application number: PCT/JP2019/023919
(87) International publication number: WO 2020/004107

(57) **Abstract**

An object is to provide a base paper for paper tube that has lower environmental impact and is used for manufacturing of paper tubes offering excellent water resistance. As a solution, a base paper for paper tube is provided, characterized in that: it has three or more but no more than five paper layers; its overall basis weight is 250 g/m² or more; and among the paper layers, the innermost layer and outermost layer have a basis weight of 25 g/m² or more but no more than 75 g/m².

## Description

### Technical Field

The present invention relates to a base paper for paper tubes, as well as paper tubes, especially paper tubes offering excellent water resistance, made of such base paper for paper tubes.

### Background Art

Plastics are widely used as materials for various products because they are inexpensive and can be formed easily, and at least 300 million tons of plastic products are produced annually.

Although many plastic products are properly disposed of, some enter the environment as waste due to mismanagement or illegal dumping and eventually flow into the oceans. It is estimated that at least eight million tons of plastic waste ends up in the oceans per year. Much of this plastic waste is non-biodegradable and almost entirely accumulated in the oceans, and by 2050, the total quantity of plastics in the oceans is projected to exceed the total quantity of fish (based on weight).

Efforts are underway to prevent environmental destruction caused by plastic waste, and there are calls for replacing disposable plastic products with materials having lower environmental impact. In particular, environmental protection groups, etc., are calling for a ban on using plastic straws that are consumed by over 500 million units just in the United States or one billion units around the world every day and reportedly causing deaths by accidental ingestion in sea birds and sea turtles.

Along with biodegradable plastics, paper is drawing attention as an alternative material for plastic straws that has lower environmental impact.

For example, paper straws are proposed in Patent Literatures 1 and 2. To make paper, which has poor water resistance, into straws, however, a thermoplastic resin is applied on a paper material in Patent Literature 1, while a polyethylene film or aluminum foil is attached on both the interior and exterior sides of a paper base material in Patent Literature 2.

### Background Art Literature

### Patent Literature

Patent Literature 1: Japanese Patent Laid-open No. Hei 06-133840
Patent Literature 2: Japanese Patent Laid-open No. 2009-233348

### Summary of the Invention

### Problems to Be Solved by the Invention

An object of the present invention is to provide a base paper for paper tubes that has lower environmental impact and is used for manufacturing paper tubes offering excellent water resistance.

### Means for Solving the Problems

The means for achieving the object of the present invention are as follows:
1. A base paper for paper tubes characterized in that:
   it has three or more but no more than five paper layers;
   its overall basis weight is 250 g/m² or more; and
   among the paper layers, the innermost layer and outermost layer have a basis weight of 25 g/m² or more but no more than 75 g/m².
2. A base paper for paper tubes characterized in that:
   it has three or more but no more than five paper layers;
   its overall basis weight is 200 g/m² or more; and
   among the paper layers, the outermost layer has a basis weight of 25 g/m² or more but no more than 75 g/m².
3. The base paper for paper tubes according to 1 or 2, characterized in that the paper layers are bonded by a water-soluble or water-dispersible adhesive.
4. The base paper for paper tubes according to any one of 1 to 3, characterized in that the adhesive is polyvinyl alcohol-based.
5. The base paper for paper tubes according to any one of 1 to 3, characterized in that the adhesive is acrylic-based.
6. The base paper for paper tubes according to any one of 3 to 5, characterized in that the paper layers are bonded by a biodegradable adhesive.
7. A paper tube characterized in that it is made of the base paper for paper tubes according to any one of 1 to 6.
8. The paper tube according to 7, characterized in that its diameter is 3 mm or more but no more than 20 mm.

Hereinafter, in this Specification, the base paper for paper tubes in 1 may also be referred to as "first base paper," the base paper for paper tubes in 2 may also be referred to as "second base paper," and the first base paper and the second base paper may also be referred to collectively as "base paper" or "base paper for paper tubes."

### Effects of the Invention

The base paper for paper tubes proposed by the present invention is primarily paper and has lower environmental impact. Also, the base paper for paper tubes proposed by the present invention has excellent water resistance despite being primarily paper, and can be utilized suitably for paper tubes used in applications where they come in contact with water. When a water-soluble or water-dispersible adhesive is used, the base paper for paper tubes proposed by the present invention can reduce the environmental impact it may otherwise have during manufacturing and can also be utilized suitably for paper tubes that come in contact with one's mouth, such as straws. Furthermore, when a biodegradable adhesive is used, the base paper for paper tubes proposed by the present invention will biodegrade in its entirety even if it flows into the environment, which makes any adverse environmental impact minuscule.

### Mode for Carrying Out the Invention

### <Base Paper for Paper Tube>

Details of the present invention are explained below.

### • First Base Paper

The first base paper proposed by the present invention is characterized in that: it has three or more but no more than five paper layers; its overall basis weight is 250 g/m² or more; and among the paper layers, the innermost layer and outermost layer have a basis weight of 25 g/m² or more but no more than 75 g/m².

The first base paper proposed by the present invention has three or more but no more than five paper layers. The smaller the number of paper layers, the more excellent water resistance becomes; however, reliability drops because rolling the base paper into a paper tube of small diameter becomes difficult. Accordingly, the number of paper layers should be adjusted as deemed appropriate according to water resistance and rollability.

The first base paper proposed by the present invention has an overall basis weight of 250 g/m² or more, where this basis weight is preferably no more than 450 g/m², or more preferably 280 g/m² or more but no more than 420 g/m², or yet more preferably 300 g/m² or more but no more than 400 g/m². If the overall basis weight is less than 250 g/m², the base paper will crush easily when immersed in water. If the overall basis weight is more than 450 g/m², on the other hand, rolling the base paper into a paper tube may become difficult and the edge parts of the rolled tube may peel easily.

With the first base paper proposed by the present invention, which has three or more but no more than five paper layers, the basis weight of the innermost layer and outermost layer among these paper layers is 25 g/m² or more but no more than 75 g/m². By adjusting the basis weight of the innermost layer and outermost layer among the paper layers to 25 g/m² or more but no more than 75 g/m², both water resistance and rollability can be achieved at the same time. Also, when a paper tube is formed by spiral rolling, adjusting the basis weight of the outermost layer to the aforementioned range allows for formation of a smoother paper tube because the height gaps at the overlapping parts will decrease. If the basis weight of the innermost layer and outermost layer is less than 25 g/m², poor rollability may result from the paper breaking easily during paper tube manufacturing. Also, the base paper will break easily due to impact, etc., especially when immersed in water. If the basis weight of the innermost layer and outermost layer is more than 75 g/m², on the other hand, rolling the base paper into a paper tube may become difficult, leading to poor rollability especially when the diameter is small. Also, the edge parts will peel easily, especially when immersed in water. It should be noted here that, in this Specification, "innermost layer" and "outermost layer" refer to the layer positioned on the innermost side, and the layer positioned on the outermost side, in a paper tube state, respectively. The basis weight and thickness of each layer may be the same or different.

### • Second Base Paper

The second base paper proposed by the present invention is characterized in that: it has three or more but no more than five paper layers; its overall basis weight is 200 g/m² or more; and among the paper layers, the outermost layer has a basis weight of 25 g/m² or more but no more than 75 g/m².

The second base paper proposed by the present invention has three or more but no more than five paper layers. The smaller the number of paper layers, the more excellent water resistance becomes; however, reliability drops because rolling the base paper into a paper tube of small diameter becomes difficult. Accordingly, the number of paper layers should be adjusted as deemed appropriate according to water resistance and rollability.

The second base paper proposed by the present invention has an overall basis weight of 200 g/m² or more, where this basis weight is preferably no more than 450 g/m², or more preferably 220 g/m² or more but no more than 420 g/m², or yet more preferably 250 g/m² or more but no more than 400 g/m². If the overall basis weight is less than 200 g/m², the base paper will crush easily when immersed in water. If the overall basis weight is more than 450 g/m², on the other hand, rolling the base paper into a paper tube may become difficult and the edge parts of the rolled tube may peel easily.

With the second base paper proposed by the present invention, which has three or more but no more than five paper layers, the basis weight of the outermost layer among these paper layers is 25 g/m² or more but no more than 75 g/m². By adjusting the basis weight of the outermost layer among the paper layers to 25 g/m² or more but no more than 75 g/m², both water resistance and rollability can be achieved at the same time, and also when a paper tube is formed by spiral rolling, a smoother paper tube can be formed because the height gaps at the overlapping parts will decrease. If the basis weight of the outermost layer is less than 25 g/m², poor rollability may result from the paper breaking easily during paper tube manufacturing. Also, the base paper will break easily due to impact, etc., especially when immersed in water. If the basis weight of the outermost layer is more than 75 g/m², on the other hand, rolling the base paper into a paper tube may become difficult, leading to poor rollability. Also, the edge parts will peel easily, especially when immersed in water. Additionally, with the second base paper proposed by the present invention, the basis weight of the innermost layer is preferably over 75 g/m², or more preferably 80 g/m² or more. The basis weight and thickness of each layer may be the same or different.

### <Paper Layers>

Under the present invention, a paper layer is a layer constituted by pulp, filler, various auxiliary agents, etc. If the base paper for paper tubes proposed by the present invention is used as a base paper for straws, preferably materials that have been approved as food additives, or are FDA-certified or otherwise conforming to food safety regulations, are used.

For the pulp, any of known pulps may be compounded and used as deemed appropriate, such as: needle bleached kraft pulp (NBKP), needle unbleached kraft pulp (NUKP), leaf bleached kraft pulp (LBKP), leaf unbleached kraft pulp (LUKP), sulfite pulp (SP), and other wood chemical pulps; ground pulp (GP), refiner ground pulp (RGP), stone ground pulp (SGP), chemi-ground pulp (CGP), semi-chemical pulp (SCP), thermomechanical pulp (TMP), chemi-thermomechanical pulp (CTMP), and other wood mechanical pulps; non-wood pulps obtained from kenaf, bagasse, bamboo, hemp, straw, etc.; and used paper pulps obtained by removing from used paper, which is used as raw material, any inks contained in the used paper by means of a de-inking process.

It should be noted that, if the base paper for paper tubes proposed by the present invention is used as a base paper for straws, LBKP, NBKP, or other chemical pulp hardly causing mixing-in of foreign matter is preferred, and the compounding quantity of used paper pulp is preferably small. To be specific, the compounding quantity of chemical pulp is preferably 80 percent or higher, where it is particularly preferable that the compounding quantity of chemical pulp is 100 percent.

For the filler, any of known fillers may be used, such as: talc, kaolin, calcinated kaolin, clay, heavy calcium carbonate, light calcium carbonate, white carbon, zeolite, magnesium carbonate, barium carbonate, titanium dioxide, zinc oxide, silicon oxide, amorphous silica, aluminum hydroxide, calcium hydroxide, magnesium hydroxide, zinc hydroxide, barium sulfate, calcium sulfate, and other inorganic fillers; and urea-formalin resin, polystyrene resin, phenol resin, fine hollow particles, and other organic fillers. It should be noted that, under the present invention, the paper layers need not use any filler, and preferably they do not use any filler.

For the various auxiliary agents, any auxiliary agents may be selected and used as deemed appropriate, where examples can include: rosin, alkyl ketene dimer (AKD), alkenyl succinate anhydride (ASA), or other sizing agent, polyacrylic amide polymers, polyvinyl alcohol polymers, cationized starch, any of various other modified starches, urea-formalin resin, melamine-formalin resin, or other dry paper strength enhancing agent, wet paper strength enhancing agent, yield-improving agent, drainage aids, coagulating agent, aluminum sulfate, bulking agent, dye, fluorescent whitening agent, pH adjuster, defoaming agent, ultraviolet protective agent, fading inhibitor, pitch-controlling agent, and slime-controlling agent.

Under the present invention, preferably the paper layers contain a wet paper strength enhancing agent. For the wet paper strength enhancing agent, polyamide polyamine epichlorohydrin resin, polyamine epichlorohydrin resin, polyamide epichlorohydrin resin, polyvinyl amin resin, polyethylene imine resin, etc., may be used. Among these, polyamide polyamine epichlorohydrin resin is preferred.

The wet paper strength enhancing agent is added by preferably 0.1 percent by mass or more but no more than 1.5 percent by mass, or more preferably 0.5 percent by mass or more but no more than 1.0 percent by mass, relative to the total pulp.

The quantity of wet paper strength enhancing agent can be determined by the Kjeldahl method, energy dispersive X-ray analysis, or other element analysis. Under the present invention, the quantity of wet paper strength enhancing agent contained in the paper layers represents an equivalent value assuming that the entire quantity of nitrogen determined using the Kjeldahl method is derived from polyamide polyamine epichlorohydrin resin. Preferably the paper layers contain a wet paper strength enhancing agent by 0.05 percent by mass or more but no more than 0.70 percent by mass relative to the total quantity of pulp.

### <Adhesive>

Adhesive bonds the adjoining paper layers together. Although any adhesive may be used without limitation, a water-soluble or water-dispersible adhesive is preferred because it reduces environmental impact during manufacturing and can also be used safely for paper tubes that come in contact with one's mouth, such as straws. Water-soluble adhesives and water-dispersible adhesives include, for example: water-soluble adhesives based on polyvinyl alcohol, polyethylene oxide, polyacrylic amide, starch, gelatin, casein, ether cellulose, phenol resin, water glass, etc.; and water-dispersible adhesives based on acrylic, vinyl acetate, ethylene-vinyl acetate copolymer, styrenebutadiene copolymer, urethane, α-olefin, etc. Under the present invention, a polyvinyl alcohol-based adhesive is preferred as a water-soluble adhesive. Also, an acrylic-based adhesive is preferred as a water-dispersible adhesive. Furthermore, preferably the adhesive is biodegradable in view of environmental concerns. To be specific, a water-soluble or water-dispersible adhesive constituted by a starch, polyvinyl alcohol (PVA), polylactic acid (PLA), cellulose acetate, polybutylene succinate (PBS), or polybutylene succinate adipate (PBSA)-based or other biodegradable resin is preferred.

If the base paper for paper tubes proposed by the present invention is used as a base paper for straws, preferably an adhesive that has been approved as a food additive, or is FDA-certified or otherwise conforming to food safety regulations, is used.

### <Papermaking and Bonding Methods>

The method for manufacturing paper layers (papermaking) and type of paper machine are not limited in any way, and a Fourdrinier paper machine, twin-wire paper machine, cylinder paper machine, gap former, hybrid former (on-top former), or any other known manufacturing (papermaking) method/paper machine can be selected.

Also, the papermaking pH level may be in the acidic range (acidic papermaking), pseudo-neutral range (pseudo-neutral papermaking), neutral range (neutral papermaking) or alkaline range (alkaline papermaking), and an alkaline chemical may also be applied on the paper layer surface after the papermaking has been performed in the acidic range.

The method for bonding paper layers is not limited in any way, and it may be, for example, a method whereby paper layers obtained through the papermaking and drying processes are cut to a prescribed width and then bonded, or a method whereby paper layers obtained through the papermaking process are bonded while wet and then dried and cut.

### <Paper Tubes>

Paper tubes can be manufactured from the base paper for paper tubes proposed by the present invention. The method for manufacturing paper tubes is not limited in any way and they can be manufactured according to spiral rolling, flat rolling, or other known method; however, spiral rolling is preferred because it permits continuous production.

The diameter of the paper tube is not limited in any way and it can have various diameters according to the purpose. Given the excellent water resistance of paper tubes conforming to the present invention, for example, those paper tubes having a diameter of 3 mm or more but no more than 20 mm can be utilized suitably, while others having a diameter of 5 mm or more but no more than 15 mm can be utilized more suitably, as paper straws. It should be noted that, under the present invention, the diameter of the paper tube indicates the outer diameter of the paper tube.

If the paper tube proposed by the present invention is used as a paper straw, its water resistance, as measured according to the method described in [Examples] below, is preferably 10 minutes or longer, or more preferably 15 minutes or longer, or yet more preferably 20 minutes or longer.

### Examples

The present invention is explained using examples below; it should be noted, however, that the present invention is not limited to the following examples.

### Example 1

Five paper layers (having basis weights of 40/40/110/40/40, all in units of g/m², the same hereinafter; each paper layer containing a wet paper strength enhancing agent) was coated with a 10% aqueous solution of a starch-based adhesive (manufactured by Nihon Shokuhin Kako Co., Ltd.; product name: Corn Starch Y; not water resistant) to an equivalent of 3 g/m² in solids content between each pair of layers, and then bonded together to manufacture a base paper with an overall basis weight of 282 g/m².

### Example 2

A base paper with an overall basis weight of 309 g/m² was manufactured in the same manner as in Example 1, except that four paper layers (having basis weights of 40/110/110/40, containing a wet paper strength enhancing agent) were bonded together.

### Example 3

A base paper with an overall basis weight of 282 g/m² was manufactured in the same manner as in Example 1, except that the 10% aqueous solution of the starch-based adhesive was changed to a 10% aqueous solution of a PVA-based adhesive (manufactured by Kuraray Co., Ltd., product name: EXCEVAL HR3010, water resistant).

### Example 4

A base paper with an overall basis weight of 309 g/m² was manufactured in the same manner as in Example 2, except that the 10% aqueous solution of the starch-based adhesive was changed to a 10% aqueous solution of a PVA-based adhesive (manufactured by Kuraray Co., Ltd., product name: EXCEVAL HR3010, water resistant).

### Example 5

A base paper with an overall basis weight of 309 g/m² was manufactured in the same manner as in Example 2, except that the 10% aqueous solution of the starch-based adhesive was changed to a 10% water dispersion of a water-dispersible acrylic-based adhesive (water resistant).

### Example 6

Three paper layers (having basis weights of 110/110/40, containing a wet paper strength enhancing agent) were coated with a 10% aqueous solution of a starch-based adhesive (manufactured by Nihon Shokuhin Kako Co., Ltd.; product name: Corn Starch Y; not water resistant) to an equivalent of 3 g/m² in solids content between each pair of layers, and then bonded together to manufacture a base paper with an overall basis weight of 266 g/m².

### Example 7

A base paper with an overall basis weight of 266 g/m² was manufactured in the same manner as in Example 6, except that the 10% aqueous solution of the starch-based adhesive was changed to a 10% aqueous solution of a PVA-based adhesive (manufactured by Kuraray Co., Ltd., product name: EXCEVAL HR3010, water resistant).

### Example 8

A base paper with an overall basis weight of 226 g/m² was manufactured in the same manner as in Example 7, except that three paper layers (having basis weights of 90/90/40, containing a wet paper strength enhancing agent) were bonded together.

### Comparative Example 1

A base paper with an overall basis weight of 303 g/m² was manufactured in the same manner as in Example 1, except that two paper layers with a basis weight of 150 g/m² (not containing any wet paper strength enhancing agent) were bonded together.

### Comparative Example 2

A base paper with an overall basis weight of 336 g/m² was manufactured in the same manner as in Example 1, except that three paper layers with a basis weight of 110 g/m² (containing a wet paper strength enhancing agent) were bonded together.

### Comparative Example 3

A base paper with an overall basis weight of 336 g/m² was manufactured in the same manner as in Example 1, except that three paper layers with a basis weight of 110 g/m² (not containing any wet paper strength enhancing agent) were bonded together.

### Comparative Example 4

A base paper with an overall basis weight of 249 g/m² was manufactured in the same manner as in Example 1, except that four paper layers with a basis weight of 60 g/m² (not containing any wet paper strength enhancing agent) were bonded together.

### Comparative Example 5

A base paper with an overall basis weight of 298 g/m² was manufactured in the same manner as in Example 1, except that seven paper layers with a basis weight of 40 g/m² (containing a wet paper strength enhancing agent) were bonded together.

### Comparative Example 6

A base paper with an overall basis weight of 298 g/m² was manufactured in the same manner as in Example 1, except that seven paper layers with a basis weight of 40 g/m² (not containing any wet paper strength enhancing agent) were bonded together.

### Comparative Example 7

A base paper with an overall basis weight of 277 g/m² was manufactured in the same manner as in Example 1, except that ten paper layers with a basis weight of 25 g/m² (not containing any wet paper strength enhancing agent) were bonded together.

A paper tube of 8 mm in diameter and 180 mm in length was manufactured by spiral rolling from each of the base papers obtained above, and then evaluated as below. The results are shown in Table 1. It should be noted that "Innermost layer side" and "Outermost layer side" under "Basis weights of paper layers" mean the interior side and the exterior side of the rolled paper tube, respectively.

### <Water Resistance>

Six hundred milliliters of 20°C water was put in a glass beaker of 100 mm in diameter and 110 mm in height. A 300-g weight was attached to one end part of the prepared paper tube, after which the paper tube was lowered into the glass beaker and immersed in the water, with the end part without weight pointing down, and the time until the load caused the paper tube to bend was measured.

### <Peeling of End Part>

Six hundred milliliters of 20°C water was put in a glass beaker of 100 mm in diameter and 110 mm in height. One end part of the prepared paper tube was immersed in water for 30 seconds and then removed, and visually evaluated for degree of peeling.
O: Did not peel.
×: Peeled.

**[Table 1]**

| | Basis weights of paper layers | Wet paper strength enhancing agent | Number of layers | Adhesive | Water resistance of adhesive | Total coating weight of adhesive | Overall basis weight | Water resistance | Peeling of end part |
|---|---|---|---|---|---|---|---|---|---|
| | g/m² | | | | | | | | |
| | Innermost layer side Outermost layer side | | layers | | | g/m² | g/m² | seconds | |
| Example 1 | 40/40/110/40/40 | ○ | 5 | Starch-based | X | 12 | 282 | 98 | ○ |
| Example 2 | 40/110/110/40 | ○ | 4 | Starch-based | X | 9 | 309 | 124 | ○ |
| Example 3 | 40/40/110/40/40 | ○ | 5 | PVA-based | ○ | 12 | 282 | 28 minutes | ○ |
| Example 4 | 40/110/110/40 | ○ | 4 | PVA-based | ○ | 9 | 309 | 33 minutes | ○ |
| Example 5 | 40/110/110/40 | ○ | 4 | Acrylic-based | ○ | 9 | 309 | 29 minutes | ○ |
| Example 6 | 110/110/40 | ○ | 3 | Starch-based | X | 6 | 266 | 95 | ○ |
| Example 7 | 110/110/40 | ○ | 3 | PVA-based | ○ | 6 | 266 | 30 minutes | ○ |
| Example 8 | 90/90/40 | ○ | 3 | PVA-based | ○ | 6 | 226 | 23 minutes | ○ |
| Comparative Example 1 | 150/150 | - | 2 | Starch-based | X | 3 | 303 | 33 | X |
| Comparative Example 2 | 110/110/110 | ○ | 3 | Starch-based | X | 6 | 336 | 84 | X |
| Comparative Example 3 | 110/110/110 | - | 3 | Starch-based | X | 6 | 336 | 27 | X |
| Comparative Example 4 | 60/60/60/60 | - | 4 | Starch-based | X | 9 | 249 | 15 | ○ |
| Comparative Example 5 | 40 x 7 layers | ○ | 7 | Starch-based | X | 18 | 298 | 18 | ○ |
| Comparative Example 6 | 40 x 7 layers | - | 7 | Starch-based | X | 18 | 298 | 5 | ○ |
| Comparative Example 7 | 25 x 10 layers | - | 10 | Starch-based | X | 27 | 277 | 4 | ○ |

The Comparative Examples confirmed a trend of lower water resistance with an increase in the number of paper layers. Also, a higher basis weight, especially that of the outermost layer, caused the end part to peel easily when immersed in water.

Paper tubes free of peeled end parts and having excellent water resistance could be manufactured from the base papers for paper tubes in Examples 1 to 8 conforming to the present invention. Particularly from the base papers for paper tubes in Examples 3, 4, 5, 7, and 8, where a water-resistant adhesive was used, paper tubes having superior water resistance of 23 minutes to 33 minutes and thus suitably usable as paper straws could be manufactured.

## Claims

1. A base paper for paper tubes, **characterized in that**:
it has three or more but no more than five paper layers;
its overall basis weight is 250 g/m² or more; and
among the paper layers, an innermost layer and an outermost layer have a basis weight of 25 g/m² or more but no more than 75 g/m².

2. A base paper for paper tubes, **characterized in that**:
it has three or more but no more than five paper layers;
its overall basis weight is 200 g/m² or more; and
among the paper layers, an outermost layer has a basis weight of 25 g/m² or more but no more than 75 g/m².

3. The base paper for paper tube according to claim 1 or 2, **characterized in that** the paper layers are bonded by a water-soluble or water-dispersible adhesive.

4. The base paper for paper tube according to any one of claims 1 to 3, **characterized in that** the adhesive is polyvinyl alcohol-based.

5. The base paper for paper tube according to any one of claims 1 to 3, **characterized in that** the adhesive is acrylic-based.

6. The base paper for paper tube according to any one of claims 3 to 5, **characterized in that** the paper layers are bonded by a biodegradable adhesive.

7. A paper tube **characterized in that** it is made of the base paper for paper tube according to any one of claims 1 to 6.

8. The paper tube according to claim 7, **characterized in that** its diameter is 3 mm or more but no more than 20 mm.
